# EUROPEAN PATENT SPECIFICATION

(11) **EP 4 088 093 B1**
(45) Date of publication and mention of the grant of the patent: **18.06.2025**
(21) Application number: 20823849.3
(22) Date of filing: 16.12.2020
(51) Int. Cl.: G01M 3/18

(54) **GAS LEAK DETECTOR**
GASLECKAGEDETEKTOR
DÉTECTEUR DE FUITE DE GAZ

(30) Priority: 08.01.2020 EP 20150650
(43) Date of publication of application: 16.11.2022
(73) Proprietor: Makeen Gas Solutions A/S, 8940 Randers SV (DK)
(72) Inventor: NIELSEN, Bent Lindrup, 8920 Randers NV (DK); BECQ, Olivier, 8940 Randers (DK); HERVOUET, Stéphane, 36110 VINEUIL (FR)
(74) Representative: Plougmann Vingtoft a/s
(86) International application number: PCT/EP2020/086339
(87) International publication number: WO 2021/139976

(56) References cited:
- WO-A1-2019/170784
- FR-A1- 2 458 064
- FR-A1- 2 522 820

## Description

### FIELD OF THE INVENTION

The invention relates to a gas leak detector and in particular to a gas leak detector for detecting a leak of liquefied petroleum gas, from a gas container, such as a LPG gas cylinder.

### BACKGROUND OF THE INVENTION

Filling of containers with one or more gases is a common task of packaging gas e.g. for transportation or storage purposes. Within the field of filling containers with gas, such as liquid petroleum gas - also known as LPG, filling systems and/or transport systems with turntables and carousels are often used.

In order to ensure that the gas containers do not leak, one or more gas leak detectors are normally provided in such systems. In case of detecting a leak of gas from a gas container, this particular container will be sorted out either automatically or manually. Due to the fire and/or explosion hazard in such environment, all operation is provided in a secured way among others to prevent any sparks to occur.

These types of gas filling systems with leak detection are used for filling and leak detecting several hundreds or even thousands of containers per hour with LPG.

In FR2522820 there is disclosed a gas leak detector comprising a bell that covers the head of the bottle and air and any gas is passed from the bell and through detection means.

FR2785049 discloses gas bottles, which arrive on a platform 1 and are positioned 3 on axis ZZ. A bell 6 covers the head of the bottle and after air rinsing 10, 62, further air and any gas is passed through a valve 19 to an infrared absorption analyzer 141. Finally, the valve is opened and a pressure depression draws the remaining air and gas through the analyzer. An electronic unit 142 interprets the results and signals a module 5, which controls the subsequent bottle path.

FR 2764978 discloses a system for detecting gas leakage from a gas cylinder and valve and includes a mobile cover, which is intended to encase the valve assembly. An infrared sensor is provided which is sensitive to the presence of the gas contained within the cylinder. This is connected to a pipe, which leads from the cover, which surrounds the valve assembly, enabling the gas within the cover to be sampled. Beyond the infrared detector there is a device to force gas through the pipe, from the mobile cover, past the infrared sensor and out into the atmosphere. The diameter of at least part of the transfer pipe is reduced in order to ensure a speed of gas flow in excess of 10 metres per second. A pipe diameter of 5mm or less may be chosen to achieve a gas flow speed of 20 to 70 metres per second.

FR2458064A1 discloses that leaks in bottles of liquified gas such as propane or butane are detected particularly in the area of the tap assembly. This is performed by use of an infrared analyser and an indicator gas. Gas bottles are placed on a conveyor and moved to a leakage test station where a bell shaped assembly fixed to a vertical jack shaft is lowered onto the bottle. A supply tube is attached to a source of indicator gas via a distributor. A second inlet is attached to the collar near the lower opening to communicate with an interval chamber. A flow limiter controls flow in the supply tube. A series of breathers communicate with a pump and are connected to a gas analyser where an infrared detector is coupled to an alarm indicator.

Gas leak detection systems where a leak of the pressurised gas inside a gas cylinder and to the outside is detected as follows are also known. A leak of gas is detected by moving at least a main part of the cylinder through a water bath and detecting if any bobbles occur, the bobbles being caused by a leak of gas. Among others, since a certain flow of cylinders is needed through such water bath, such as e.g. 1200-1800 cylinders per hour, it may be difficult to detect which gas cylinder has a leakage. Typically, leakage detected with these water baths are leakages through openings in the material of the cylinder walls and/or through welds in the cylinder, such as due to corrosion in the lower end of the cylinder.

It has been found that the prior art systems do not ensure that any leaking gas containers are detected in due time, while factors such as filling and leak detecting capacity of such systems are also considered.

It has also been found that in known systems, it is difficult to clean the housing, to get the residual gas out of the housing before the next gas container is tested. This results in false test results, where gas containers are found to be leaking even though they are not, because gas residues in the housing form a previous test is causing a false positive result.

The inventors of the present invention have appreciated that an improved gas leak detector and method of detecting a gas leak is of benefit, and have in consequence hereof devised the present invention.

### SUMMARY OF THE INVENTION

It may be seen as an object of the present invention to provide an improved gas leak detector and method of detecting a leak of gas. Preferably, the invention alleviates, mitigates or eliminates one or more of the above or other disadvantages singly or in any combination.

Accordingly, the invention is defined by a gas leak detector and method for detection of a leak of liquefied petroleum gas (LPG) in accordance with the independent claims.

Thus, provided is an improved gas leak detector. A possible advantage by providing the gas leak detector as described herein is that any leaking gas containers can be detected in due time, while the leak detecting capacity can even also be improved when compared to known systems.

The substantially closed space, or in practice the closed space is understood as the closed space formed within the housing and within a portion of the closed loop such an external gas tight conduit connected to the housing.

The airflow generator provides by the airflow a mixture of existing air and gas leak - if any gas leak occurs. Hereby, an amount of leaked gas will be part of the mixture and thus cannot 'hide' within the housing.

The airflow generator improves mixing of the air and the possible gas leak to thereby provide a the mixture of air and leaked gas. The air flow generator moves the mixture of air and leaked gas to establish the circulation of the mixture of air and leaked gas in the gas tight closed loop. Accordingly, the air flow generator moves at least a portion of the volume of the mixture of air and leaked to the detector.

In particular, it is of benefit, when the mixture of air and any leak of gas is moved past the detection means by the airflow generator.

It may alternatively or additionally be seen as an advantage of the invention, which is based on the insight, disclosed hereby, that the described solution improves detection since no air for creating turbulence inside the housing and/or in the closed loop is added from the outside. Such air may decrease concentration of gas leak inside the housing and/or may even force at least part of a leak out of the housing.

It is to be understood that the detection means may include means for emitting and/or receiving light, such as infrared light, and/or sound signals, and thus outputting and receiving means. Such means may be built into a combined emitting/receiving unit. Furthermore, it is to be understood that reflection means, such as a mirror, may be used and provided in the housing in order to reflect signals within the housing. Reflection means can be provided in order to utilise the combined unit and/or in order to increase a length which the signals travel within the housing prior to being received.

As examples, the first type of leak of the pressurised gas from the gas container valve unit may be due to a faulty valve. The second type of leak may be due to a leak in a connection between the valve unit and the material of the container, such as in connection with a thread, a bad or faulty welding of a bung with threads (may also be called a valve pad) to the material of the gas container. The third type of leak is typically due to corrosion in the bottom part of the gas container, e.g. where a bottom ring is attached to the gas container, the third type of leak could also be a bad leaky joint like a leaky welding or another kind of leaking joint. The container can be made of steel, but it can also be made of all kind of different composite material suited for the LPG marked.

The external surface is a surface the housing can substantially close up against, to surround at least the gas container valve unit.

The advantage of keeping the air/gas mixture in a closed loop is that when not adding any air or gas from the outside to the mixture, only gas leaking from the gas container is added to the air/gas mixture in the closed space and in the closed loop. Further, no air or gas leaves the closed loop. This results in that when there is a gas leak, the concentration of gas in the closed loop will increase as more and more gas leaks from the gas container. Therefore, the detection means will detect an increasing amount of gas in the air/gas mixture, underlining the detector is registering a leak and not only a possible residual gas from a previous test.

The closed loop means herein a loop where a gas may possibly be forced into, but where any gas is substantially not allowed to or able to exit under normal circumstances. A gas forced into the substantially closed loop may e.g. be the gas itself being forced out of the gas container, due to the pressure in the gas container, but it may additionally or alternatively be a relative little quantity of air such as cleaning or purging air, which has not yet been shut off.

By circulating and continuously mixing air and leaked gas by means of the air flow generator, the detector will measure a continuous increase of the gas concentration as a function of time so that a possible leak can be detected dependent on the rate-of-change of the measured gas concentration and/or dependent on the measured gas concentration at a given time, such as a maximum test time.

According to an embodiment, the gas tight closed loop comprises a circuit connected to the housing to enable circulation of the mixture of air and leaked gas via a fluidic passageway of the circuit.

The fluidic passageway is closed and gas tight so that gas is not able to exit the circuit between the inlet and outlet of the circuit. Accordingly, the circuit is a closed circuit in the sense that gas is not able to exit between the inlet and the outlet.

The circuit such as a gas tight conduit, e.g. a tube, may be connected to the housing via a gas tight connection that provides a fluidic connection from/to the housing and the circuit. The inlet of the circuit may be connected to the housing at one location such as an upper part thereof (when in a normal up-right position during use) and the outlet may be connected to the housing at a different location such as a lower part thereof. The circuit may be arranged externally to the housing (i.e. connected to outside portions of the housing), and may be arranged to move the mixture of air and leaked gas from one location of the housing to another location.

According to the invention, the circuit comprises the detection means and/or the airflow generator. Advantageously, the detection means and/or the airflow generator may be placed in an external portion of the circuit. For example, the detector may be placed in an external portion for eased electrical connection. The airflow generator may also be placed in an external portion of the circuit, or between the circuit and the housing. It is understood that the circuit may comprise several circuit elements where individual circuit elements may comprise the detector and the airflow generator, respectively.

In some embodiments of the invention, the external surface is a surface of the gas container. In these embodiments, the external surface can be a surface part of the gas container, which is in immediate vicinity of the valve unit. Hereby the housing can enclose at least the valve unit for detection of at least the first type of leak. When the housing is provided with e.g. a somewhat larger diameter, the housing can enclose the valve unit and a surface part of the gas container where the valve unit is connected to the gas container, so as also to enable detection of the second type of leak.

The means for providing the substantially closed connection may comprise the housing being provided with a flexible substantially gas impermeable material around an opening of the housing, this opening is preferable in the bottom part of the housing. The flexible material is in contact with the external surface, such as the gas container in immediate vicinity of the valve unit, when the gas container is detected for any leak. These means may alternatively or additionally comprise that a surface at the bottom part of the housing is formed so that it fits the external surface, and so as to form the substantially close space when the bottom part of the housing is moved towards the external surface.

Thus, in accordance with embodiments of the invention, the means for providing the substantially closed connection may comprise that the shape of an opening in the bottom part of the housing is structurally adapted to fit to and surround the surface part of the gas container in immediate vicinity of where the valve unit is provided. The means for providing the substantially closed connection may alternatively or additionally comprise that the bottom part of the housing is provided with a flexible substantially gas impermeable material around the opening. Such flexible material will then preferably be in contact with the surface of the gas container in immediate vicinity of the valve unit when the gas container is detected for any leak.

The same type of structural adaption of the bottom part of the housing and/or the same manner of providing a flexible material can be provided when the external surface is a support plate for the container.

When the housing is provided with a size so as to enable enclosure of at least a upper part and sides of the gas container, thus possibly the complete gas container when co-operating with the external surface, a leak of one or more of the first, second and third leaks can be detected at once. In such embodiments, the external surface can be such as a support plate for the gas container, such as a steel plate for the gas container to be supported by during the detection, and for the bottom part of the housing to be moved relatively to in order to form the substantially closed space within the housing.

When the housing is in a closed connection with the external surface, then the closed space such as the closed space in the housing, the detection means and the airflow generator are part of a gas tight closed loop so that the airflow generator circulates the mixture of air and leaked gas in the closed loop.

According to an embodiment of the invention, the gas-leak detector further comprises a support plate to support the gas container and a rinsing fan to blow fresh air into the space over the support plate when the housing is not in a closed connection with the external surface.

The space over the support plate is the space, where the closed space in the housing is, when the housing is connected to the support plate. Adding a rinsing fan to blow fresh cleaning air into the space over the support plate further reduces the time for residual gasses from a previous test to get away from this space.

With the rinsing fan blowing cleaning air through an outlet in the support plate and into the space above the support plate, ensures residual gasses is quickly blown away from the test area above the support plate reducing time, before a new test of a another container can be initiated.

The rinsing fan starts blowing air over the support plate, when the housing is disconnected from the support plate and stops blowing air over the support plate, when the housing is connected to the support plate. This can be done by turning on and turning off the rinsing fan. The disadvantage by this method is that it takes a little time for the rinsing fan to start and stop. Alternatively and preferable, a valve can be placed between the rinsing fan and the air outlet. Then the valve is immediately opened, when the housing is disconnected from the support plate, allowing the air to blow over the support plate immediately. Further, the valve is closed, when the housing is connected to the support plate, immediately stopping the flow of air over the support plate, avoiding adding further air to the air/gas mixture in the closed loop avoiding diluting the mixture. Such a valve will make it possible to quickly stop or start the air blowing into the space above the support plate in a controlled manner.

According to an embodiment of the invention, the detection means and/or the airflow generator is located outside the housing and the detection means and/or airflow generator and/or a diffuser is placed in the circuit, such as the closed circuit, connected to the housing, such as the closed space, forming the closed loop.

Placing the detection means and the airflow generator outside the housing gives more flexibility. The detection means and the airflow generator can be used with different housings and there is more flexibility by replacing airflow generator or the detection means.

According to an embodiment of the invention, the mixture of air and any leak of gas is returned to the housing through the diffuser.

In some embodiments of the invention, the detection means and the gas leak detector is placed outside the housing in a closed circuit. The closed circuit is connected to the closed space in the housing, and is constructed so no air or gas from the outside can enter the closed circuit or the closed space during operation. The closed space and the closed circuit together forms a closed loop. The airflow generator circulates the air/gas mixture in the closed loop. The air/gas mixture is circulated from the closed space in the housing through an outlet in the support plate to the detection means, which is an analyser, analysing the air/gas mixture to detect whether there is gas in the mixture. The air/gas mixture from the detection means re-enters the closed space in the housing through a diffuser, completing the circulation in the closed loop.

The diffuser advantageously can by formed in such a way that it spreads the incoming air/gas mixture as much as possible to create some kind of turbulence in the upper part of the housing. Spreading the incoming air/gas mixture ensures there will be no areas in the upper part of the housing, which are not ventilated, avoiding pockets of gas hiding in the corners of the housing.

According to an embodiment of the invention, the detection means and/or the airflow generator is located inside the housing, and the detection means and/or airflow generator together with the closed space forms a closed loop inside the housing.

In an alternatively embodiment the detection means and the gas leak detector can be placed inside the housing, then the closed loop will be inside the housing, and there might not be any closed circuit connecting devices from outside the housing to the closed loop. This allows for a compact set up without external part needing to be connected to the housing.

In case of detection of a leak in response to (a change in) a signal from the detection means, possibly with following data analysis e.g. in view a threshold etc. e.g. by a control system, the given gas container is sorted out for further inspection, possible repair or controlled emptying and disposal.

According to the invention, the bottom part of the housing is movable relatively to the top part of the housing.

According to an embodiment of the invention, the side part of the housing is fixed to the bottom part and/or the top part with a solid fixture forming a gas tight seal.

The solid fixture can be a clamping ring, or the solid fixture can be made by glue or by some kind of joint. Heat or other chemical means can be used to create the solid fixture. The main issue is that the fixture is gas tight, so that no air or gas can pass between the side part and the top or bottom part.

According to an embodiment of the invention, the side part of the housing and the bottom part of the housing is made in one piece, or the side part and the top part is made in one piece.

According to an embodiment of the invention, the side part is at least partly formed of flexible material, like rubber, synthetic rubber, PVC or other flexible materials, which can be stretched or folded to at least partly surround the gas container.

Having a flexible housing with a flexible side part between the top part and the bottom part has the advantage that when a test is completed you can quickly release the bottom part from the external surface and lift the bottom part up. This allow for the air/gas mixture in the housing to escape quickly from the space in the housing, so that gas residuals quickly can get away, making the gas detector ready for testing a new gas container.

According to an embodiment of the invention, the side part can be moved, stretched or extended to cover the changed distance between the top part and bottom part.

With the side part made of a flexible and possible an elastic material, the side part of the housing can be stretched or folded to be longer or shorter as the need requires.

Typically, when the bottom part is connected to the external surface, the side part can be loose and wrinkly, and then by moving the top part up, the side part is stretched and become smooth and strait, removing possible obstacles that create air resistance, securing a free passage for the airflow through the housing.

To reduce stress and tension on the side part, it is preferred to keep
the side part in a state, where it is not stretched when moving the bottom part towards the external surface, and only stretch the side part by moving the top part up after the bottom part is connected to the external surface.

This increases the lifespan of the housing, so that the housing can be used for more tests, before it needs to be replaced.

According to an embodiment of the invention, the side part at least partly is formed of a telescopic arrangement, wherein two or more tubes are sealed off against one another and can be axially adjusted into one another, to make the side part extendable to at least partly surround the gas container.

The advantage of the telescopic embodiment is that the individual tubes are not bent or strained in any way and therefore not worn or torn reducing lifespan, it is just moving up and down.

According to an embodiment of the invention, the side part at least partly is formed of a bellow arrangement, which can be moved to at least partly surround the gas container.

According to an embodiment of the invention, the side part at least partly is formed of a tube, which can be moved to at least partly surround the gas container.

The tube or other tubular element may be moved while the top part is stationary or while the top part moves. Advantageously, a solution where the side part can be moved independently of the top part (which may be individually moveable or fixed) provides a simple construction for facilitating replacement of the gas containers.

The advantage of the tube embodiment is that the tube is not strained in any way and therefore not worn or torn reducing lifespan, it is just moving up and down, or the top part moves up and down inside the tube. Having fewer movable parts making the tube embodiment less exposed to wear and tear.

According to an example, the gas leak detector further comprises a separate test unit, which can be placed around the gas container valve unit to detect a gas leak from the gas container valve unit.

The separate test unit comprises a gas detection sensor and possible also a fan to circulate air/gas mixture in the separate test unit. The separate test unit is lowered down over the gas container valve unit to form a gastight connection with the surface of the gas container, so that gas leaking from the valve unit or from between the gas container valve unit and the gas container is contained in the separate test unit. The advantage is that the separate test unit can detect a gas leak from the valve unit, and it is clear that the leak is from the valve unit and not from another part of the container.

According to an embodiment of the invention, the side part of the housing is movable relative to the bottom part and/or the top part. The side part is connected to the bottom part and/or the top part by a seal, the seal making a gas tight connection but allows the side part to move relative to the bottom part and/or the top part.

According to an embodiment of the invention, the bottom part of the housing comprises means for providing a closed and sealed connection between the housing and the external surface, when the bottom part is moved relatively to the external surface in order to form a closed space within the housing.

According to an embodiment of the invention, the top part is moved by a first moving mechanism and/or the bottom part is moved by a second moving mechanism, the second moving mechanism provides the means to move the bottom part from an initial position to a position in contact with the external surface.

According to an embodiment of the invention, wherein the bottom part is moved by a second moving mechanism, the second moving mechanism provides the means to move the bottom part from an initial position to a position in contact with the external surface.

According to an embodiment of the invention, the top part and the bottom part are move simultaneous either in parallel or by different speed.

Moving the top part and bottom part in parallel is also possible using either the first moving mechanism or the second moving mechanism to move both the top part and the bottom part. The advantage of moving the top part and the bottom part in parallel is that there is not stress on wear on the side part keeping the same form during the movement. Another possibility is, when the bottom part is moved away from the external surface, to move the bottom part faster than the top part, but still move the top part to as quickly as possible. The advantage is to get the housing in a position as far away from the external surface as possible to maximize the rinsing speed of the space above the external surface.

According to an embodiment of the invention, the first moving mechanism and/or the second moving mechanism moves the top part and/or the bottom part to stretch the side part to form a substantially strait closed connection between the top part and the bottom part.

According to an embodiment of the invention, the external surface is the support plate used to support the gas container when the gas leak detector is in use, or the external surface is a surface part of the gas container where, the valve unit is provided.

According to an embodiment of the invention, the detection means and/or the airflow generator are connected to the housing through the support plate, such as through an outlet in the support plate.

Particularly, the pressurized gas within the gas container is a gas, which is heavier than air, such as a liquefied gas, in particular a liquefied petroleum gas (LPG).

In an embodiment of the invention, the airflow generator comprises one or more fans, each fan having one or more fan blades. In a preferred embodiment, the fan is an air driven fan, i.e. a pneumatically driven fan where a force for driving the fan is provided from an air driven turbine.

According to an embodiment, the gas leak detector comprises a pressure detector arranged downstream of the airflow generator. The gas leak detector may further comprise a detection controller arranged to determine a leakage fault in the gas tight closed loop dependent on measurements from the pressure detector.

According to an aspect of the invention, there is provided a method for detection a leak of gas as defined in claim 10.

According to an aspect of the invention, the method for detection a leak of gas further comprises- moving the housing relative to the external surface to at least partly surround the gas container, and
- providing a closed connection between the housing and the external surface when the bottom part of the housing is moved relatively to the external surface in order to connect the housing to the external surface forming a closed space, and making the closed space, the detection means and the airflow generator a part of a gas tight closed loop,
- circulating a mixture of air and any leak of gas within the closed loop using the airflow generator, and
- detecting the first and/or the second and/or the third type of leak of gas with the detection means, the detection being provided in the closed loop while any leak of gas remains within the closed loop.

According to an aspect of the invention, the method for detection a leak of gas further comprises a rinsing fan blowing fresh air into the space over the support plate to blow away any residual gas when the housing is not in a closed connection with the external surface.

Thus, an improved method of gas leak detection is provided. Possible advantages of the method follows from the described in relation to the gas leak detector and/or from the remaining description. Thus, the advantages or benefits described for the apparatus aspect also apply for the method aspect. Particularly, the manner of how to operate the apparatus, e.g. as elaborated above also applies to the method aspect of the invention, and method claims for such embodiments are foreseen within the basis and wording present and used herein, e.g. above in the summary for the apparatus aspect.

Prior to the step b) the housing can be purged with substantially clean air, such as to prevent any remaining leak from a leak of a prior gas container detection of being present in the housing.

In general by writing that 'it is an advantage' or a benefit or similar of the present invention and referring thereto, it must be understood that this advantage may be seen as a possible advantage provided by the invention, but it may also be understood that the invention is particularly, but not exclusively, advantageous for obtaining the described advantage.

In general, the various aspects, i.e. device and method and advantages of the invention may be combined and coupled in any way possible within the scope of the invention which is defined by the claims.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 is a side-view of a gas leak detector,
FIG. 2 is the gas leak detector with the airflow circuit when the housing is in an opened position,
FIG. 3 is the gas leak detector with the airflow circuit when the housing is in a closed position,
FIG. 4 is an embodiment of the housing where the side part of the housing is made of flexible material,
FIG. 5 is an embodiment of the housing wherein the side part of the housing is a telescopic arrangement,
FIG. 6 is an example of the housing with a separate test unit for detecting leak of gas from a gas container valve unit,
FIG. 7 is an embodiment of the housing wherein the side part of the housing is a tube, which is movable and not fixed to the top part of the housing,
FIG. 8 is a graph showing the increase of gas in the closed loop during a gas leak.

### DESCRIPTION OF EMBODIMENTS

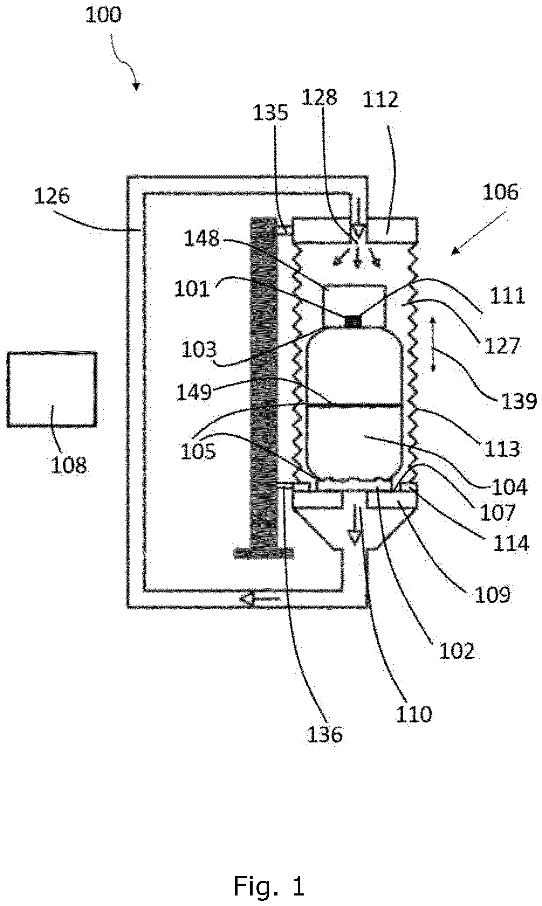

FIG. 1 is a side-view of a gas leak detector 100. The gas leak detector 100 may be included in a gas filling system for filling gas containers. The leak detector 100 is generally used for detecting, if a gas container 104 with a gas under pressure, such as liquid petroleum gas (LPG), has a gas leak.

At the top of the gas container 104 is a valve unit 111, used for filling the container 104 with gas, or for gas leaving the container 104. A shroud 148 protects the valve unit 111.

A leak can be from the container valve unit 111, and/or from an assembly such as a bung between the gas container valve unit 111 and the gas container 104 and/or from the gas container 104 itself, such as where a base ring 102 is attached to the container 104 or where different parts of the gas container 104 are joined together by a joint 149 or from any part of the gas container 104.

Normally the system works automatically, and is included where filling of the gas containers is also carried out and sorts out any or those containers having one of the mentioned first, second and/or third types of leak.

The shown gas leak detector 100 can be a part of a complete transport system for transporting the gas container in a gas container filling system and/or in a gas leak detecting system. In the shown embodiment, a leak detector 100 is provided for the gas containers to be transported to a position of the gas leak detector. Alternatively, a gas leak detector is mounted on each transport unit in the transport system in order to detect any leak of gas for a prolonged detection time period compared to, if the gas containers were to be transported to the position of the gas leak detector. Alternatively, several single leak detection stations or systems can be provided in order to prolong detection time and/or to increase capacity.

The figure illustrates a gas leak detector 100 for detecting a leak of gas from a first type of leak of gas 101 from a gas container valve unit 111 and/or a second type of leak of gas 103 between the gas container valve unit 111 and the gas container 104 and/or a third type of leak of gas 105 through a wall or a welding or a joint in the gas container 104. The third type of gas leak is typically in the lower part of the gas container 104 as illustrated, such as at the attachment of a base ring 102 of the gas cylinder as illustrated, where the base ring 102 is welded or otherwise joined to the gas container 104. In addition, when the gas container 104 is made of more parts, which are joint together, a third type of leak of gas 105 can occur from the joint 149. The gas container is typically made of metal or by a composite material. The third type of leak 105 from a gas container 104, especially if the gas container 104 is of composite material, can also occur from anywhere on the surface of the gas container 104.

As illustrated, the gas-leak detector 100 includes a housing, in this embodiment a housing 106, which can be moved horizontally and relatively to an external surface, in this embodiment a support plate 109, so as at least partly to surround the gas container valve unit 111. This movement is illustrated with the two-way arrow 139.

The housing 106 comprises a top part 112, a side part 113 and a bottom part 114. The side part 113 of the housing is fixed to the bottom part 114 and to the top part 112 with a solid fixture forming a gas tight seal. The solid fixture can be a clamping ring or glue or welding or any other joining means making an gas tight sealing which can hold a pressure difference between the inside and the outside of the housing.

The top part 112 and the bottom part 114 can be moved up and down by a first moving mechanism 135 moving the top part 112 and a second moving mechanism 136 moving the bottom part 114.

Further Fig. 1 shows a closed circuit 126 connected to the housing 106 through an outlet 110 in the support plate 109 and a diffuser 128 in the top part 112. In the housing is a closed space 127. The closed space 127 together with the closed circuit 126, the outlet 110 and the diffuser 128 form a closed loop in which the air/gas mixture circulates.

The closed circuit 126 or just circuit may be understood as a closed circuit since it provides a closed, i.e. gas tight, fluidic connection between two openings of the housing 106. Thus, it is understood that the housing 106 forms the substantially closed space 127 together with the circuit 126. The circuit 126 may comprise, or is constituted by, a tube such as a rigid metal tube, a flexible rubber tube, including combinations thereof, or other conduit arranged to transport the air and any possible gas leak.

That is, the closed space 127 including the space within housing 106 and the space within the circuit 126 is closed, or substantially closed, in the sense that it is a space where a gas leak from the gas container 104 may possibly be forced into, but where any gas is substantially not allowed to or able to exit. By the term closed, or substantially closed, used in connection with the closed space 126, is understood that a minor amount of gas or air may escape, e.g. due to minor leakages such as leakages in the sealing between the housing and the external surface. Such minor leakages would only insignificantly affect the increase of the gas concentration in the closed space 127 over time in case of a leaky gas container.

Similarly, by the gas tight closed loop, or the substantially gas tight closed loop, is understood that minor leakages may be present which, however, only insignificantly affect the concentration of gas leaks.

Alternatively, and technically equivalent, the closed space 127 is defined by the space within the housing 106 which is closed, or substantially closed, in the sense that any gas is substantially not allowed to or able to exit the housing, except at the fluidic connections to the circuit 126.

A control unit 108 controls the movement of the first moving mechanism 135 and the second moving mechanism 136.

Obviously, when the top part 112 is movable the connection between the closed circuit 126 and the diffuser 128 most be flexible, for instance by a hose, in order to allow the top part 112 to move.

In Fig. 1, the embodiment shown is an embodiment with a flexible side part 113. Of course, any other embodiment of the housing mentioned below or otherwise allowing the top part and bottom part to move relative to each other can be used.

The housing comprises means (not detailed in the figure) for providing a substantially closed connection between the housing 106 and the external surface 107, when the housing is moved relatively to the external surface in order to form a substantially closed space within the housing. In the drawing it is indicated that the housing is moved, which may be preferred. However, the support plate may additionally or alternatively also move upwards, so that the housing is connectable to the gas container by moving the housing with moving means towards the external surface and/or vice versa.

In the figures a cylindrical housing 106 is shown, though it is to be understood that the housing may have any form as long as it has an opening, which fits around the container, and as long as it can be adapted to form the substantially closed space when connected to the support plate 109.

Herein is referred to a gas container 104. However, the gas containers are gas bottles or gas cylinders as illustrated in the figures. These containers are standardized containers for storing gas, such as propane gas or LPG in liquid form, e.g. for industrial use or for use in households for supplying gas to cookers, heaters and other devices. The gas containers have a weight from approximately 2.5 to 50.0 kg when empty and a weight from approximately 5.0 to 100.0 kg when filled. A height of such gas containers is typically from approximately 150 mm to 1500 mm. A diameter or width of the gas containers is typically from approximately 150 mm to 400 mm.

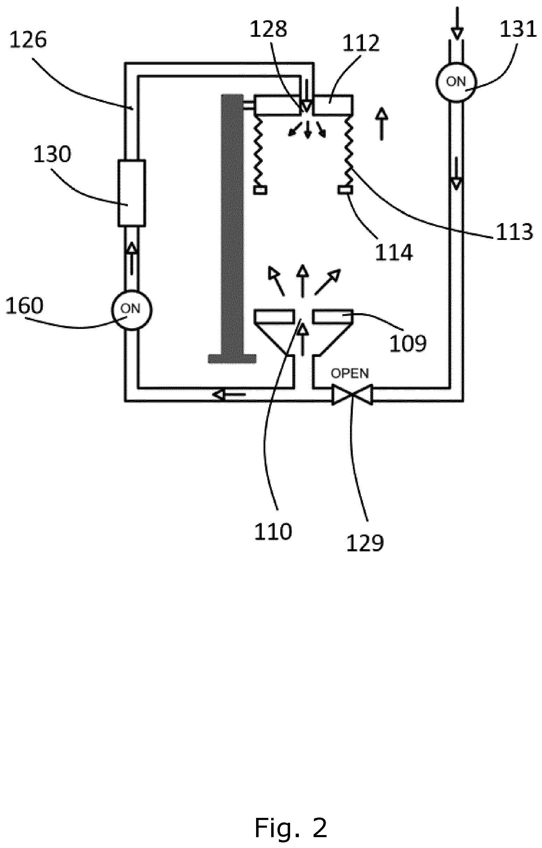

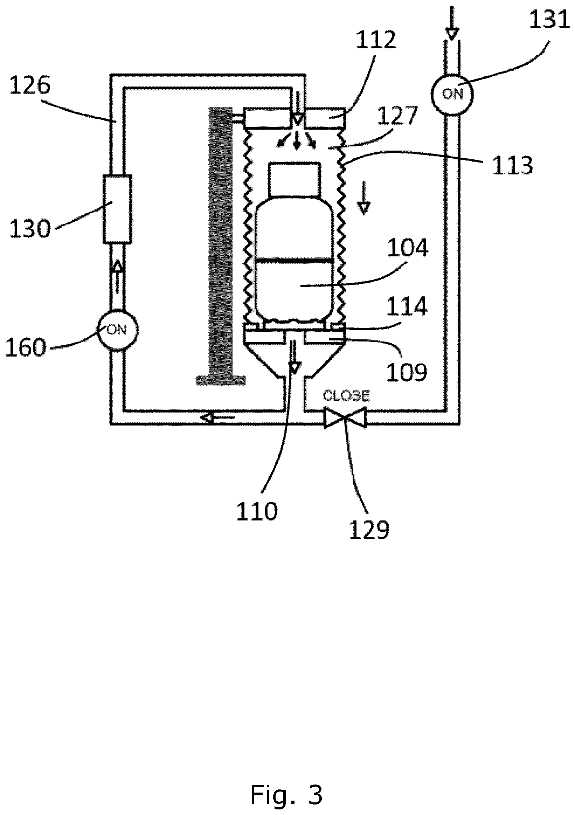

FIG. 2 and 3 shows different stages during the gas detection process. In Fig 2 the space over the support plate is being rinsed. The housing 106 is open and the bottom part 114 of the housing is moved far away from the support plate 109 to allow gas, from the space in the housing 106 between the support plate 109 and the top part 112, to get away from the space. This is done by blowing fresh, clean air out through the outlet in the support plate 109 into the space above the support plate 109, blowing away any residual leaked gas from the space to avoid a false result in the next test. Also fresh air goes through the closed circuit 126 to blow out of the diffuser 128 to blow away possible gas residuals from the upper part of the housing 106. The fresh air enters the system through a valve 129; the valve 129 is opened through the rinsing process but closed during the leakage detection process. A rinsing fan 131 is blowing fresh air into the circuit.

Fig. 3 is the stage where gas is detected. The housing is now closed. A gas container 104 is placed inside the housing 106 and the housing has been closed, by moving the bottom part 114 of the housing into a closed sealed connection with the support plate 109, forming a closed space 127 inside the housing 106. The valve 129 to the rinsing fan 131 is closed, so that no fresh air can enter the circuit. The airflow generator 160 is circulating the air/gas mixture in the closed loop and driving the air/gas mixture through the detection means 130. The air/gas mixture circulates from the closed space 127 in the housing, 106 through the outlet 110 to the airflow generator 160 and the detection means 130 and further on to the diffuser 128 and back into the closed space 127 in the housing 106.

A leakage in the gas tight closed loop could result in wrong test results since a gas leak from a gas container 104 may at least partly disappear to the surroundings via the leakage with the result that the test shows that the gas container 104 does not leak gas. Such leakages could be due to a faulty connection between the circuit 126 and the inlet to the top part 112, an insufficient or faulty sealing between the bottom part 114 and external surface 107 such as the support plate 109 and other leakages.

According to an embodiment, the gas leak detector 100 is configured with a pressure detector arranged to detect any leakage in the closed loop. Thus, a leakage would result in pressure drop which is detectable by the pressure detector. In general, during a test the pressure is increased downstream of the airflow generator 160. Accordingly, the pressure sensor may be located anywhere downstream of the airflow generator 160 and advantageously upstream of the inlet to the top part 112, such as between the airflow generator 160 and the detection means 130.

During the transition from the rinsing phase to the test phase, the rinsing fan 131 blows fresh air via the valve 129 into the circuit 126. With the sealed connection between the bottom part 114 and the support plate 109 this leads to an increased pressure which is detectable by the pressure detector. However, in case of a leakage in the circuit 126, the pressure increase would be smaller.

Thus, by monitoring the measurements from the pressure detector a leakage could be detected both before the test is started due pressure generated by the rinsing fan 131 and during test by the pressure generated by the airflow generator 160.

For the purpose of determining a leakage fault in the gas tight closed loop, such as in the circuit 126, the gas leak detector 100 may comprise a detection controller arranged to determine the leakage fault dependent on measurements from the pressure detector, e.g. by comparing measurements with threshold pressure values.

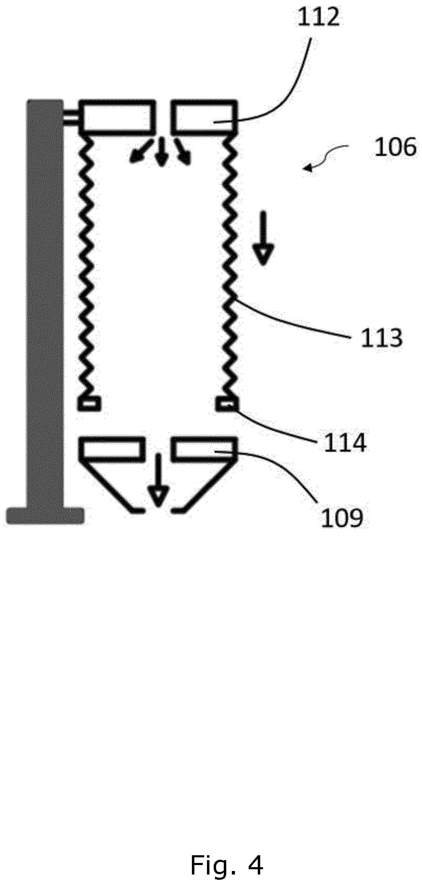

Fig. 4 shows an embodiment of the housing 106 where the side part 113 of the housing is made of flexible material like rubber, synthetic rubber, PVC or other flexible materials, which can be stretched or folded.

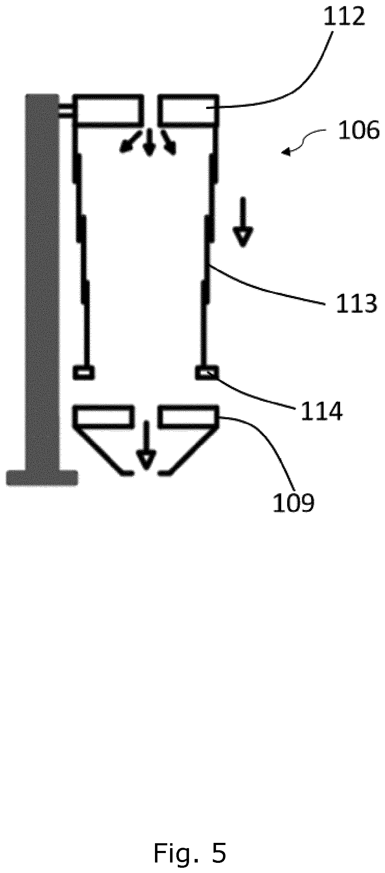

Fig. 5 shows an embodiment of the housing 106, where the side part 113 of the housing is a telescopic arrangement, wherein two or more tubes are sealed off against one another and can be axially adjusted into one another to make the side part extendable to at least partly surround the gas container.

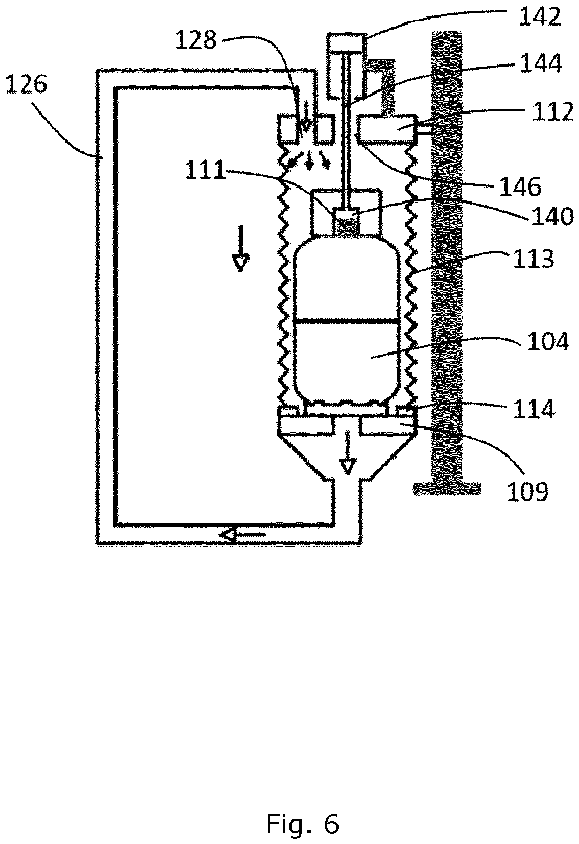

Fig. 6 shows an embodiment of the housing 106, where there is a separate test unit 140 for detecting leak of gas from a gas container valve unit 111. This separate test unit 140 can be lowered down by a lowering mechanism 142 to make a sealed space around the valve unit 111 detecting gas in this sealed space, narrowing down the leak to be in the valve unit 111. The lowering mechanism 142 is located outside the housing 106 and the separate test unit 140 is located inside the housing 106. The separate test unit 140 is connected to the lowering mechanism 142 by a rod 144. The rod 144 is passing through the top part 112 of the housing 106 and the passage 146 through the top part 112 is sealed for instance by an o-ring or another kind of suitable seal. The separate test unit 140 comprises a gas detection sensor (not shown) and possible also a fan (not shown) to circulate air/gas mixture in the separate test unit 140. The separate test unit 140 is lowered down over the gas container valve unit 111 to form a gastight connection with the surface of the gas container 104, so that gas, leaking from the valve unit 111 or from between the gas container valve unit 111 and the gas container 104, is captured for detection inside the separate test unit 140. In fig. 6 is shown a housing with a flexible side part 113, but any of the different embodiments of the side part 113 can be used.

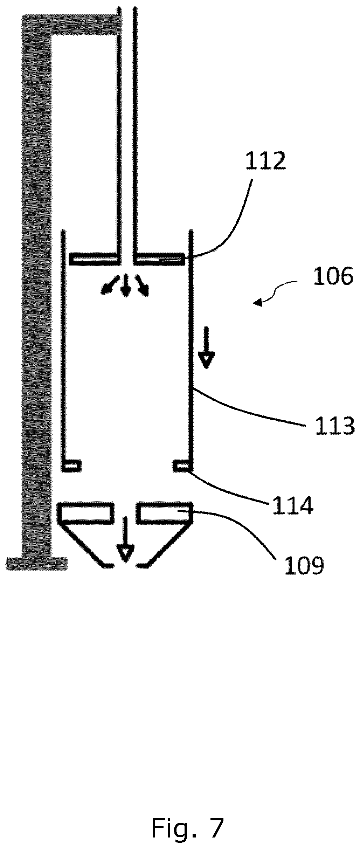

Fig. 7 shows an embodiment of the housing 106, wherein the side part 113 of the housing is a tube, or where at least an inner portion extending along the longitudinal direction of the housing is tubular such as cylindrically shaped. The tube is fixed to the bottom part 114 but not to the top part 112. The top part 112 therefore can be moved inside the side part 113 as a piston. The top part 112 is connected to the side part 113 by a seal, the seal making a gas tight connection but allows the side part 113 to move relative to the top part 112.

Advantageously, the configuration in Fig. 7 enables the volume in the housing to be adapted to the size of the gas container 104 so as to minimize the volume and thereby the closed space 127 in order to maximize the sensitivity to gas leaks from the cylinder 104.

That is, for a leaky cylinder having a given leak rate, a smaller closed volume will maximize the sensitivity, i.e. would reduce the time from the start of the test to the time when the leak gas concentration in the closed volume reaches a threshold leak gas concentration, such as a threshold set to define a leaky gas container or a threshold defining the smallest reliably detectable concentration.

The side part 113 is movable along the longitudinal direction indicated by the arrow, and the opposite direction. The top part 112 may be moveable with the advantage described above or may be fixed. Whether the top part 112 is movable or not, the Fig. 7 configuration may be advantageous in the process of replacing gas containers 104 since only the side part 113 needs to be lifted in order to transport a gas cylinder away, and only the side part 113 needs to be lowered to establish the closed space 127.

Particularly, when the side part 113 and the top part 112 can be moved after testing a gas container so that the side part 113 is open in both ends, the cylindrical side part 113 can be effectively rinsed.

In an example, after a test of a gas container has been performed, the gas leak detector is configured so that the cylinder is raised up to a level where the sealing or bottom part 114 approaches or contacts the top part 112. In that way, the side part 113 is efficiently rinsed by the relative motion between the side part 113 and the top part 112.

In an example, when a test is initiated, the top part 112 is lowered until it contacts or is stopped by a top part of the gas container 104, such as protruding handles of the gas container. In this way the closed volume is minimized as much as possible.

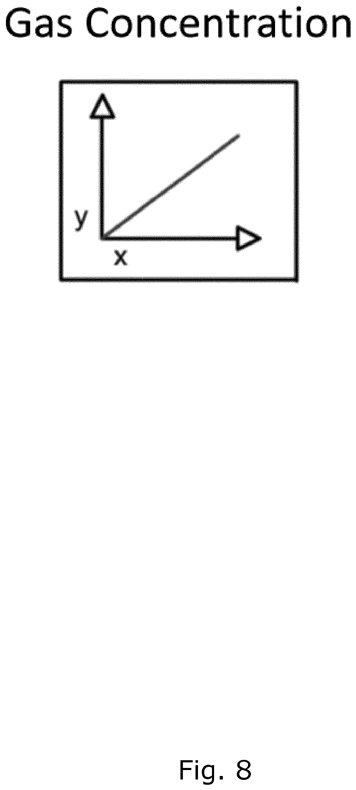

Fig. 8 is a graph showing an main advantage of the invention that gas concentration increases over time as the air/gas mixture is circulated in the closed loop, where no air from outside is added to the mixture. Therefore, only the amount of gas is increasing over time as more and more gas is leaking from the gas container 104. Therefore, when the gas ratio of the gas/air mixture is increasing over time, it is a sure proof that the gas detected is a leak from the container and not a residual amount of gas from a previous test.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims, however the inclusion of the reference signs is only for clarity reasons and should not be construed as limiting the scope of the claims.

## Claims

1. Gas leak detector for detection of a leak of liquefied petroleum gas (LPG) from
- a first type of leak of gas (101) from a gas container valve unit (111) of a LPG gas container (104) and/or
- a second type of leak of gas (103) between the gas container valve unit (111) and the gas container (104) and/or
- a third type of leak of gas (105) through a wall or a joint in the gas container (104),
wherein the gas-leak detector comprises
- a housing (106) which can be moved to at least partly surround the gas container (104), the housing (106) comprises means for providing a closed connection between the housing (106) and an external surface (107) to form a closed space (127), or a substantially closed space (127), so that the first and/or the second and/or the third type of leak of gas from the gas container (104) and/or gas container valve unit (111) leaks into the closed space (127),
- detection means (130) for detecting the first and/or the second and/or the third type of leak of gas,
- an airflow generator (160) for moving a mixture of air and any leak of gas to the detection means (130), wherein when the housing (106) is in a closed connection with the external surface (107), then the closed space (127), the detection means (130) and the airflow generator (160) are part of a gas tight closed loop, or a substantially gas tight closed loop, so that the airflow generator (160) circulates at least a fraction of the volume of the mixture of air and the leak of gas in the gas tight closed loop, wherein the gas tight closed loop comprises a circuit connected to the housing to enable the circulation of the mixture of air and the leak of gas via a fluidic passageway of the circuit, and wherein the housing (106) further comprises a top part (112), a bottom part (114) and a side part (113), and the side part (113) is connecting the top part (112) and the bottom part (114), wherein the bottom part (114) of the housing (106) is movable relatively to the top part (112) of the housing (106).

2. The gas leak detector according claim 1, wherein the circuit is arranged externally to the housing.

3. The gas leak detector according to claim 2 or 3, wherein the circuit is arranged to move the mixture of air and the leak of gas from one location of the housing to another location of the housing.

4. The gas leak detector according to any of the preceding claims, wherein the gas-leak detector further comprises a support plate (109) to support the gas container and an rinsing fan (131) to blow fresh air into the space over the support plate (109) when the housing (106) is not in a closed connection with the external surface (107).

5. The gas leak detector according to any of the preceding claims, wherein the detection means (130) and/or the airflow generator (160) is located outside the housing (106) and the detection means (130) and/or airflow generator (160) and/or a diffuser (128) is placed in the circuit (126) connected to the housing (106) forming the closed loop.

6. The gas leak detector according to any of the preceding claims, the side part (113) is at least partly formed of flexible material, like rubber, synthetic rubber, PVC or other flexible materials, which can be stretched or folded to at least partly surround the gas container (104).

7. The gas leak detector according to any of the preceding claims, wherein the side part (113) at least partly is formed of a telescopic arrangement wherein two or more tubes are sealed off against one another and can be axially adjusted into one another to make the side part extendable to at least partly surround the gas container (104).

8. The gas leak detector according to any of the preceding claims, wherein the side part (113) at least partly is formed of a tube, which can be moved to at least partly surround the gas container (104).

9. The gas leak detector according to any of the preceding claims, wherein the external surface (107) is the support plate (109) used to support the gas container (104) when the gas leak detector (130) is in use or the external surface (107) is a surface part of the gas container (104) where the valve unit (111) is provided.

10. A method for detection of a leak of liquefied petroleum gas (LPG) from
- a first type of leak of gas (101) from a gas container valve unit (111) of a gas container (104) and/or
- a second type of leak of gas (103) between the gas container valve unit (111) and the gas container (104) and/or
- a third type of leak of gas (105) through a wall or a joint in the gas container (104),
wherein the gas-leak detector comprises
- a housing (106) which can be moved to at least partly surround the gas container (104), the housing (106) comprises means for providing a closed connection between the housing and an external surface (107) to form a closed space (127), so that the first and/or the second and/or the third type of leak of gas from the gas container (104) and/or gas container valve unit (111) leaks into the closed space (127),
- detection means (130) for detecting the first and/or the second and/or the third type of leak of gas, the detection means (130) are either located in the closed space (127) in the housing or in a closed circuit (126) connected to the closed space (127),
- an airflow generator (160) for moving a mixture of air and any leak of gas to the detection means (130), the airflow generator (160) are either located in the closed space (127) in the housing or in a closed circuit (126) connected to the closed space (127),
wherein the method comprises,
- providing a gas container (104),
- providing a closed connection between the housing (106) and the external surface (107) so that the closed space (127), the detection means (130) and the airflow generator (160) are part of a gas tight closed loop, or a substantially gas tight closed loop, and
- using the airflow generator (160) to circulate at least a fraction of the volume of the mixture of air and leaked gas in the gas tight closed loop, and
wherein the housing (106) further comprises a top part (112), a bottom part (114) and a side part (113), and the side part (113) is connecting the top part (112) and the bottom part (114), and wherein the bottom part (114) of the housing (106) is movable relatively to the top part (112) of the housing (106).

## Patentansprüche

1. Gasleckdetektor zur Erkennung eines Lecks von verflüssigtem Petroleumgas (LPG) aus
- einem ersten Typ von Gasleck (101) aus einer Gasbehälterventileinheit (111) eines LPG-Gasbehälters (104) und/oder
- einem zweiten Typ von Gasleck (103) zwischen der Gasbehälterventileinheit (111) und dem Gasbehälter (104) und/oder
- einem dritten Typ von Gasleck (105) durch eine Wand oder eine Verbindung im Gasbehälter (104),
wobei der Gasleckdetektor umfasst
- ein Gehäuse (106), das so bewegt werden kann, dass es den Gasbehälter (104) zumindest teilweise umgibt, wobei das Gehäuse (106) Mittel zum Bereitstellen einer geschlossenen Verbindung zwischen dem Gehäuse (106) und einer äußeren Oberfläche (107) umfasst, um einen geschlossenen Raum (127) oder einen im Wesentlichen geschlossenen Raum (127) zu bilden, so dass der erste und/oder der zweite und/oder der dritte Typ von Gasleck aus dem Gasbehälter (104) und/oder der Gasbehälterventileinheit (111) in den geschlossenen Raum (127) austreten,
- Detektionsmittel (130) zum Detektieren des ersten und/oder des zweiten und/oder des dritten Typs von Gasleck,
- einen Luftstromgenerator (160) zum Bewegen eines Gemischs aus Luft und jeglichem Gasleck zu den Detektionsmitteln (130), wobei, wenn das Gehäuse (106) in einer geschlossenen Verbindung mit der äußeren Oberfläche (107) steht, der geschlossene Raum (127), die Detektionsmittel (130) und der Luftstromgenerator (160) Teil eines gasdichten geschlossenen Kreislaufs oder eines im Wesentlichen gasdichten geschlossenen Kreislaufs sind, so dass der Luftstromgenerator (160) zumindest einen Anteil des Volumens des Gemischs aus Luft und dem Gasleck in dem gasdichten geschlossenen Kreislauf zirkulieren lässt, wobei der gasdichte geschlossene Kreislauf einen mit dem Gehäuse verbundenen Kreislauf umfasst, um die Zirkulation des Gemischs aus Luft und dem Gasleck über einen Fluidkanal des Kreislaufs zu ermöglichen, und wobei das Gehäuse (106) weiter ein Oberteil (112), ein Unterteil (114) und ein Seitenteil (113) umfasst, und das Seitenteil (113) das Oberteil (112) und das Unterteil (114) verbindet, wobei das Unterteil (114) des Gehäuses (106) relativ zum Oberteil (112) des Gehäuses (106) beweglich ist.

2. Gasleckdetektor nach Anspruch 1, wobei der Kreislauf außerhalb des Gehäuses angeordnet ist.

3. Gasleckdetektor nach Anspruch 2 oder 3, wobei der Kreislauf so angeordnet ist, dass er das Gemisch aus Luft und Gasleck von einer Stelle des Gehäuses zu einer anderen Stelle des Gehäuses bewegt.

4. Gasleckdetektor nach einem der vorstehenden Ansprüche, wobei der Gasleckdetektor weiter eine Trägerplatte (109) zum Tragen des Gasbehälters und einen Spülventilator (131) zum Einblasen von Frischluft in den Raum über der Trägerplatte (109) umfasst, wenn das Gehäuse (106) nicht in einer geschlossenen Verbindung mit der äußeren Oberfläche (107) steht.

5. Gasleckdetektor nach einem der vorstehenden Ansprüche, wobei sich die Detektionsmittel (130) und/oder der Luftstromgenerator (160) außerhalb des Gehäuses (106) befinden und die Detektionsmittel (130) und/oder der Luftstromgenerator (160) und/oder ein Diffusor (128) in dem Kreislauf (126) angeordnet sind, der mit dem Gehäuse (106) verbunden ist, die den geschlossenen Kreislauf bilden.

6. Gasleckdetektor nach einem der vorstehenden Ansprüche, wobei das Seitenteil (113) zumindest teilweise aus flexiblem Material wie Gummi, synthetischem Gummi, PVC oder anderen flexiblen Materialien gebildet ist, das gedehnt oder gefaltet werden kann, um den Gasbehälter (104) zumindest teilweise zu umgeben.

7. Gasleckdetektor nach einem der vorstehenden Ansprüche, wobei das Seitenteil (113) zumindest teilweise aus einer Teleskopanordnung gebildet ist, wobei zwei oder mehr Rohre gegeneinander abgedichtet sind und axial ineinander verschoben werden können, um das Seitenteil ausziehbar zu machen, um den Gasbehälter (104) zumindest teilweise zu umgeben.

8. Gasleckdetektor nach einem der vorstehenden Ansprüche, wobei das Seitenteil (113) zumindest teilweise aus einem Rohr gebildet ist, das so bewegt werden kann, dass es den Gasbehälter (104) zumindest teilweise umgibt.

9. Gasleckdetektor nach einem der vorstehenden Ansprüche, wobei die äußere Oberfläche (107) die Trägerplatte (109) ist, die zum Tragen des Gasbehälters (104) verwendet wird, wenn der Gasleckdetektor (130) in Gebrauch ist, oder die äußere Oberfläche (107) ein Oberflächenteil des Gasbehälters (104) ist, an dem die Ventileinheit (111) bereitgestellt ist.

10. Verfahren zur Erkennung eines Lecks von verflüssigtem Gas (LPG) aus
- einem ersten Typ von Gasleck (101) aus einer Gasbehälterventileinheit (111) eines Gasbehälters (104) und/oder
- einem zweiten Typ von Gasleck (103) zwischen der Gasbehälterventileinheit (111) und dem Gasbehälter (104) und/oder
- einem dritten Typ von Gasleck (105) durch eine Wand oder eine Verbindung im Gasbehälter (104),
wobei der Gasleckdetektor umfasst
- ein Gehäuse (106), das so bewegt werden kann, dass es den Gasbehälter (104) zumindest teilweise umgibt, wobei das Gehäuse (106) Mittel zum Bereitstellen einer geschlossenen Verbindung zwischen dem Gehäuse (106) und einer äußeren Oberfläche (107) umfasst, um einen geschlossenen Raum (127) zu bilden, so dass der erste und/oder der zweite und/oder der dritte Typ von Gasleck aus dem Gasbehälter (104) und/oder der Gasbehälterventileinheit (111) in den geschlossenen Raum (127) austreten,
- Detektionsmittel (130) zum Detektieren des ersten und/oder des zweiten und/oder des dritten Typs von Gasleck, wobei sich die Detektionsmittel entweder in dem geschlossenen Raum (127) in dem Gehäuse oder in einem geschlossenen Kreislauf (126), der mit dem geschlossenen Raum (127) verbunden ist, befinden,
- einen Luftstromgenerator (160) zum Bewegen eines Gemischs aus Luft und jeglichem Gasleck zu den Detektionsmitteln (130), wobei sich der Luftstromgenerator (160) entweder in dem geschlossenen Raum (127) in dem Gehäuse oder in einem geschlossenen Kreislauf (126), der mit dem geschlossenen Raum (127) verbunden ist, befindet,
wobei das Verfahren umfasst
- Bereitstellen eines Gasbehälters (104),
- Bereitstellen einer geschlossenen Verbindung zwischen dem Gehäuse (106) und der äußeren Oberfläche (107), so dass der geschlossene Raum (127), die Detektionsmittel (130) und der Luftstromgenerator (160) Teil eines gasdichten geschlossenen Kreislaufs oder eines im Wesentlichen gasdichten geschlossenen Kreislaufs sind, und
- Verwenden des Luftstromgenerators (160), um zumindest einen Anteil des Volumens des Gemischs aus Luft und ausgetretenem Gas im gasdichten geschlossenen Kreislauf zu zirkulieren, und
wobei das Gehäuse (106) weiter ein Oberteil (112), ein Unterteil (114) und ein Seitenteil (113) umfasst, und das Seitenteil (113) das Oberteil (112) und das Unterteil (114) verbindet, und wobei das Unterteil (114) des Gehäuses (106) relativ zum Oberteil (112) des Gehäuses (106) beweglich ist.

## Revendications

1. Détecteur de fuite de gaz destiné à la détection d'une fuite de gaz de pétrole liquéfié (GPL) parmi
- un premier type de fuite de gaz (101) à partir d'une unité de soupape (111) de récipient de gaz d'un récipient (104) de gaz GPL et/ou
- un deuxième type de fuite de gaz (103) entre l'unité de soupape (111) de récipient de gaz et le récipient (104) de gaz et/ou
- un troisième type de fuite de gaz (105) à travers une paroi ou une soudure dans le récipient (104) de gaz,
le détecteur de fuite de gaz comprenant
- un boîtier (106) qui peut être déplacé pour entourer au moins partiellement le récipient (104) de gaz, le boîtier (106) comprend un moyen destiné à fournir une liaison fermée entre le boîtier (106) et une surface externe (107) pour constituer un espace fermé (127), ou un espace sensiblement fermé (127), de sorte que le premier et/ou le deuxième et/ou le troisième type de fuite de gaz à partir du récipient (104) de gaz et/ou de l'unité de soupape (111) de récipient de gaz s'échappe dans l'espace fermé (127),
- un moyen de détection (130) destiné à détecter le premier et/ou le deuxième et/ou le troisième type de fuite de gaz,
- un générateur (160) de flux d'air, destiné à déplacer un mélange d'air et de toute fuite de gaz vers le moyen de détection (130), lorsque le boîtier (106) est en liaison fermée avec la surface externe (107), l'espace fermé (127), le moyen de détection (130) et le générateur de flux d'air (160) faisant alors partie d'une boucle fermée étanche aux gaz, ou d'une boucle fermée sensiblement étanche aux gaz, de sorte que le générateur (160) de flux d'air fait circuler au moins une fraction du volume du mélange d'air et de la fuite de gaz dans la boucle fermée étanche aux gaz, la boucle fermée étanche aux gaz comprenant un circuit relié au boîtier pour permettre la circulation du mélange d'air et de la fuite de gaz via un passage fluidique du circuit, et le boîtier (106) comprenant en outre une partie supérieure (112), une partie inférieure (114) et une partie latérale (113), et la partie latérale (113) reliant la partie supérieure (112) et la partie inférieure (114), la partie inférieure (114) du boîtier (106) étant mobile par rapport à la partie supérieure (112) du boîtier (106).

2. Détecteur de fuite de gaz selon la revendication 1, dans lequel le circuit est disposé à l'extérieur du boîtier.

3. Détecteur de fuite de gaz selon la revendication 2 ou 3, dans lequel le circuit est disposé pour déplacer le mélange d'air et de la fuite de gaz depuis une zone du boîtier vers une autre zone du boîtier.

4. Détecteur de fuite de gaz selon l'une quelconque des revendications précédentes, dans lequel le détecteur de fuite de gaz comprend en outre une plaque de support (109) destinée à soutenir le récipient de gaz et un ventilateur de rinçage (131) destiné à souffler de l'air frais dans l'espace au-dessus de la plaque de support (109) lorsque le boîtier (106) n'est pas en une liaison fermée avec la surface externe (107).

5. Détecteur de fuite de gaz selon l'une quelconque des revendications précédentes, dans lequel le moyen de détection (130) et/ou le générateur (160) de flux d'air est/sont situé(s) à l'extérieur du boîtier (106) et le moyen de détection (130) et/ou le générateur (160) de flux d'air et/ou un diffuseur (128) est/sont placé(s) dans le circuit (126) relié au boîtier (106) formant la boucle fermée.

6. Détecteur de fuite de gaz selon l'une quelconque des revendications précédentes, la partie latérale (113) est au moins partiellement constituée d'un matériau flexible, tel que du caoutchouc, du caoutchouc synthétique, du PVC ou d'autres matériaux flexibles, qui peut être étiré ou plié pour entourer au moins partiellement le récipient (104) de gaz.

7. Détecteur de fuite de gaz selon l'une quelconque des revendications précédentes, dans lequel la partie latérale (113) est au moins partiellement constituée d'un système télescopique dans lequel deux ou plus de deux tubes sont hermétiquement scellés l'un contre l'autre et peuvent être ajustés axialement l'un dans l'autre pour rendre la partie latérale extensible afin d'entourer au moins partiellement le récipient (104) de gaz.

8. Détecteur de fuite de gaz selon l'une quelconque des revendications précédentes, dans lequel la partie latérale (113) est au moins partiellement constituée d'un tube, qui peut être déplacé pour entourer au moins partiellement le récipient (104) de gaz.

9. Détecteur de fuite de gaz selon l'une quelconque des revendications précédentes, dans lequel la surface externe (107) est la plaque de support (109) utilisée pour soutenir le récipient (104) de gaz lorsque le détecteur (130) de fuite de gaz est utilisé ou la surface externe (107) est une partie de surface du récipient (104) de gaz où l'unité de soupape (111) est disposée.

10. Procédé de détection d'une fuite de gaz de pétrole liquéfié (GPL) parmi
- un premier type de fuite de gaz (101) à partir d'une unité de soupape (111) de récipient de gaz d'un récipient (104) de gaz et/ou
- un deuxième type de fuite de gaz (103) entre l'unité de soupape (111) de récipient de gaz et le récipient (104) de gaz et/ou
- un troisième type de fuite de gaz (105) à travers une paroi ou une soudure dans le récipient (104)de gaz,
le détecteur de fuite de gaz comprenant
- un boîtier (106) qui peut être déplacé pour entourer au moins partiellement le récipient (104) de gaz, le boîtier (106) comprend un moyen destiné à fournir une liaison fermée entre le boîtier et une surface externe (107) pour former un espace fermé (127), de sorte que le premier et/ou le deuxième et/ou le troisième type de fuite de gaz à partir du récipient (104) de gaz et/ou de l'unité de soupape (111) de récipient de gaz s'échappe dans l'espace fermé (127),
- un moyen de détection (130) destiné à détecter le premier et/ou le deuxième et/ou le troisième type de fuite de gaz, le moyen de détection (130) est situé soit dans l'espace fermé (127) dans le boîtier, soit dans un circuit fermé (126) relié à l'espace fermé (127),
- un générateur (160) de flux d'air destiné à déplacer un mélange d'air et de toute fuite de gaz vers le moyen de détection (130), le générateur (160) de flux d'air étant situé soit dans l'espace fermé (127) dans le boîtier, soit dans un circuit fermé (126) relié à l'espace fermé (127),
le procédé comprenant les étapes consistant à
- fournir un récipient (104) de gaz,
- fournir une liaison fermée entre le boîtier (106) et la surface externe (107) de manière que l'espace fermé (127), le moyen de détection (130) et le générateur (160) de flux fassent partie d'une boucle fermée étanche aux gaz, ou d'une boucle fermée sensiblement étanche aux gaz, et
- utiliser le générateur (160) de flux d'air pour faire circuler dans la boucle fermée étanche aux gaz au moins une fraction du volume du mélange d'air et de gaz échappé, et
le boîtier (106) comprenant en outre une partie supérieure (112), une partie inférieure (114) et une partie latérale (113), et la partie latérale (113) reliant la partie supérieure (112) et la partie inférieure (114), et la partie inférieure (114) du boîtier (106) étant mobile par rapport à la partie supérieure (112) du boîtier (106).
